# EUROPEAN PATENT SPECIFICATION

(11) **EP 0 751 376 B1**
(45) Date of publication and mention of the grant of the patent: **26.03.2003**
(21) Application number: 96110401.5
(22) Date of filing: 27.06.1996
(51) Int. Cl.: G01C 21/20

(54) **Vehicular navigation apparatus**
Fahrzeugnavigationsgerät
Appareil de navigation pour véhicules

(30) Priority: 28.06.1995 JP 16167995
(43) Date of publication of application: 02.01.1997
(73) Proprietor: AISIN AW CO., LTD., Anjo-shi Aichi 444-1192 (JP)
(72) Inventor: Hayasida, Kihachi, Anjo-shi, Aichi-ken, 446 (JP); Yanagikubo, Takeshi, Nishio-shi, Aichi-ken, 445 (JP)
(74) Representative: VOSSIUS & PARTNER

(56) References cited:
- EP-A- 0 583 773
- WO-A-93/13385
- US-A- 5 291 414

## Description

The present invention relates to a vehicular navigation apparatus that performs route guidance along a route found and set between a current position and a destination or a passing point.

Vehicular navigation apparatuses are designed to search for a route from a current position to a destination or the like on the basis of an inputted location such as a destination or the like, and perform route guidance based on the route found by the search, thereby reducing the difficulties that a driver faces when driving on roads unfamiliar to the driver. For this end, a typical vehicular navigation apparatus has a function for searching for a route from a current position to a destination upon input of the destination, and functions for displaying a guiding route found by the search and for detecting a current position of a vehicle. With these functions, the vehicular navigation apparatus detects a current vehicle position, and displays the current vehicle position on a guiding route found by search, in order to perform route guidance.

While being guided along a route found by the search, a driver may deviate from the route for some reasons, for example, the driver's misperception of a target object or misunderstanding. To cope with such deviation from route, Japanese patent application laying-open No. SHO 61-38518, as for example, proposes a vehicular navigation apparatus which determines that a vehicle has deviated from a guiding route (deviation from route) if a current position of the vehicle is apart from the route by a predetermined distance or greater, and then performs a search again to find a route from an intersection located ahead of the vehicle current position to the destination.

Considering the time required to re-find a guiding route from the current position to the destination after detection of the deviation from route, however, it is possible that the above-mentioned type of apparatus that performs search for a route from an intersection ahead of the vehicle may find such a guiding route after the vehicle has passed the intersection. If this should happen, the driver will have passed the intersection without knowing the direction in which the driver should have been guided at the intersection according to the search result. Therefore, the driver may well go in a direction different from the direction according to the search result. In addition, the search result will be provided without taking into account the direction in which the vehicle is traveling after passing the intersection in the above-described manner. Thus, in such an event, the driver will likely go straight through the intersection even if the driver should turn there, for example, to the left, according to the search result to be obtained in order to reach the destination, and will know the search result only after passing the intersection.

Problems similar to those mentioned above may occur when the apparatus searches for a route to return to the previous guiding route after detecting deviation from the route. Since the time required to find a route from the currently detected position to the destination or back to the previous guiding route after detection of deviation from the previous guiding route, is not ignorably short, it can happen that an optimal route connecting to an intersection is displayed after the vehicle has traveled through the intersection in a direction different from the direction according to the optimal route. Thus, the starting point of a route displayed as a result of search is not necessarily ahead of the vehicle. Furthermore, even if a route is displayed such that a crucial point, for example, of turning right or left, is ahead of the vehicle, the vehicle may be coming so close to the point that the driver cannot perform actions according to the navigation guidance in time.

As for the above-described route re-search methods, the present applicant has proposed a surrounding search method that searches for a route in order to return to the previous guiding route and connects the found route to the previous guiding route and an entire route search method that searches for a route to the destination or a passing point (Japanese patent application laying-open No. HEI 6-68389), and a second route search method that searches for another guiding route based on the route set beforehand (Japanese patent application No. HEI 6-228174. However, these methods are not free from the above-mentioned problems. In addition, similar problems will obviously arise with an initial route search performed upon the initial input of a destination or a passing point if a vehicle is started to travel before the result of search is outputted in response to the route search instruction. In such a case, the vehicle will be traveling on a road off the guiding route by the time when the search result is outputted.

The present invention is intended to solve the above-mentioned problems. It is an object of the invention to provide a vehicular navigation apparatus that is able to perform route guidance starting at an appropriate location according to the result of initial search or re-search of a guiding route.

According to the present invention, there is provided a vehicular navigation apparatus for guidance along a preset route comprising: a current position detecting device for detecting current position of a vehicle in which the device is installed; an information storing device for storing map information and other route information for route search and route guidance; an input device for inputting at least one of a destination and a passing point and for inputting an instruction to search for a route to at least one of the destination or the passing point on the basis of the current position detected by the current position detecting device; an output device for outputting information for route guidance; and a central processing device. The central processing device has route searching means for performing initial search of a route from the current position to at least one of the destination or the passing point, or later re-search (second route search, surrounding search of a route from the current position in response to the detection of deviation from route, entire route search of a route from the current position in response to the detection of deviation from route, etc.), on the basis of the map information. The central processing device further has route storing means for temporarily storing the route found by the route searching means, and route guidance control means for outputting to the output device a signal for executing route guidance based on the route. The route searching means detects a travel direction of the vehicle, and determines as a route search starting location a location on a road that is stored in the information storing device and that is located a predetermined distance ahead in the travel direction from the current position, and searches for a route from that location wherein in case an intersection is retrieved within a distance shorter than the predetermined distance the route searching means set the point at the predetermined distance ahead on a connecting road connected to a current road at the intersection, wherein the connecting road is the optimum road exiting the intersection, wherein the optimum road is the road having the least cost, which is determined based on independent road data, such as the road lengths, road types, road widths, and relative road data, such as the angle to the current road direction.

In addition, the point is not set on the connecting road in case a further intersection of the connecting road is retrieved within a distance shorter than the predetermined distance. In this case, the operation of determining a connecting road is repeated until no further intersection of the connecting road is retrieved within the predetermined distance.

In addition, when performing route search again after a route has been stored in the route storing means, the route searching means may perform route search on the basis of an instruction from the input means. Furthermore, the central processing device may further comprise off-route detecting means for determining whether a current position detected by the current position detecting device has deviated from the route, and the route searching means may perform route search again if the off-route detecting means detects deviation from route. If the vehicle is not traveling on a guidance possible road, the route searching means may wait until the vehicle comes to travel on a guidance possible road, before searching for a route. Moreover, if the route searching means has performed route search again, the route guidance control means may erase the previously found route from the route storing means and output a signal for executing route guidance based on a currently found route under a condition that the route search has been completed and the vehicle has traveled through a predetermined distance. When the route searching means performs route search again, the route guidance control means may provide a predetermined navigation guidance until the route search ends.

The vehicular navigation apparatus of the invention is provided with the central processing device including the route searching means for searching for a route from a current position to a destination or a passing point, the route storing means for temporarily storing the route found by the route searching means, and the route guidance control means for outputting to the output device a signal for executing route guidance based on the route. The apparatus uses the route searching means to detect the travel direction of the vehicle, and to determine as a route search starting location a location on a road that is stored in the information storing device and that is located a predetermined distance ahead in the travel direction from the current position, and to search for a route from that location. Thereby, the vehicular navigation apparatus of the invention prevents an incident where when a result is obtained from an initial search or a re-search, guidance is performed along a route starting at a location that the vehicle has passed.

In addition, the route searching means performs re-search of a route on the basis of an instruction from the input means. Furthermore, the central processing device comprises the off-route detecting means for determining whether a current position detected by the current position detecting device has deviated from the route. If the vehicle is not traveling on a guidance possible road (where the apparatus can provide guidance) when the off-route detecting means detects deviation from route, the route searching means waits until the vehicle comes to travel on a guidance possible road, before searching for a route. Thereby, the apparatus is able to perform re-search of a route upon a driver's request and automatic re-search in response to detection of deviation from route. Furthermore, since if the route searching means has performed route re-search the route guidance control means erases the previously found route from the route storing means and outputs a signal for executing route guidance based on the currently found route under a condition that the route re-search has been completed and the vehicle has traveled through a predetermined distance, the route guidance can be switched at appropriate timing to the guidance based on the route found by the re-search. In addition, since while the route searching means performs route re-search the route guidance control means provides a predetermined navigation guidance until the route search ends, the apparatus prevents a disagreement between the result of the re-search and the current vehicle travel direction even when the re-search starting location was set beyond an intersection ahead or the like.

The foregoing and further objects, features and advantages of the present invention will become apparent from the following description of preferred embodiments with reference to the accompanying drawings, wherein:
Fig. 1 illustrates a basis construction of the vehicular navigation of the present invention;
Fig. 2 illustrates an embodiment of the vehicular navigation of this invention;
Fig. 3 illustrates the flow of operation of the entire system;
Fig. 4 illustrates the flow of operation of the entire system;
Fig. 5 illustrates an example of the off-route operation;
Fig. 6 illustrates another example of the off-route operation;
Fig. 7 illustrates an example of the operation of setting re-search starting location;
Fig. 8 illustrates an example of the operation of setting re-search starting location;
Fig. 9 illustrates another example of the operation of setting re-search starting location;
Fig. 10 illustrates an example of the table that shows the correspondence among the vehicle speed, the type of road and the distance;
Figs. 11A and 11B illustrate examples of the guiding route found by a re-search executed by the off-route operation;
Fig. 12 illustrates an example of the operation performed when the vehicle has turned right or left before reaching the starting point; and
Fig. 13 illustrates an example road network and an example road data arrangement.

An embodiment of the invention will be described hereinafter with reference to the accompanying drawings.

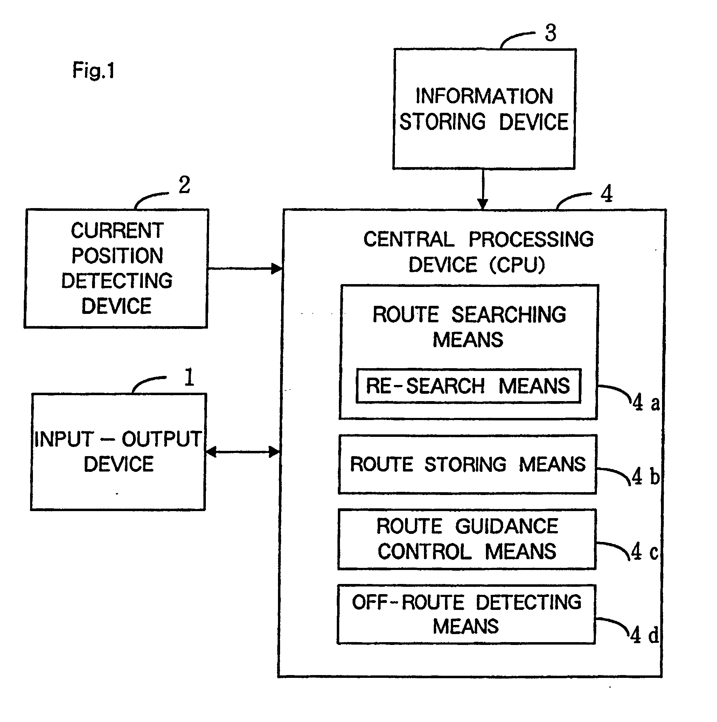

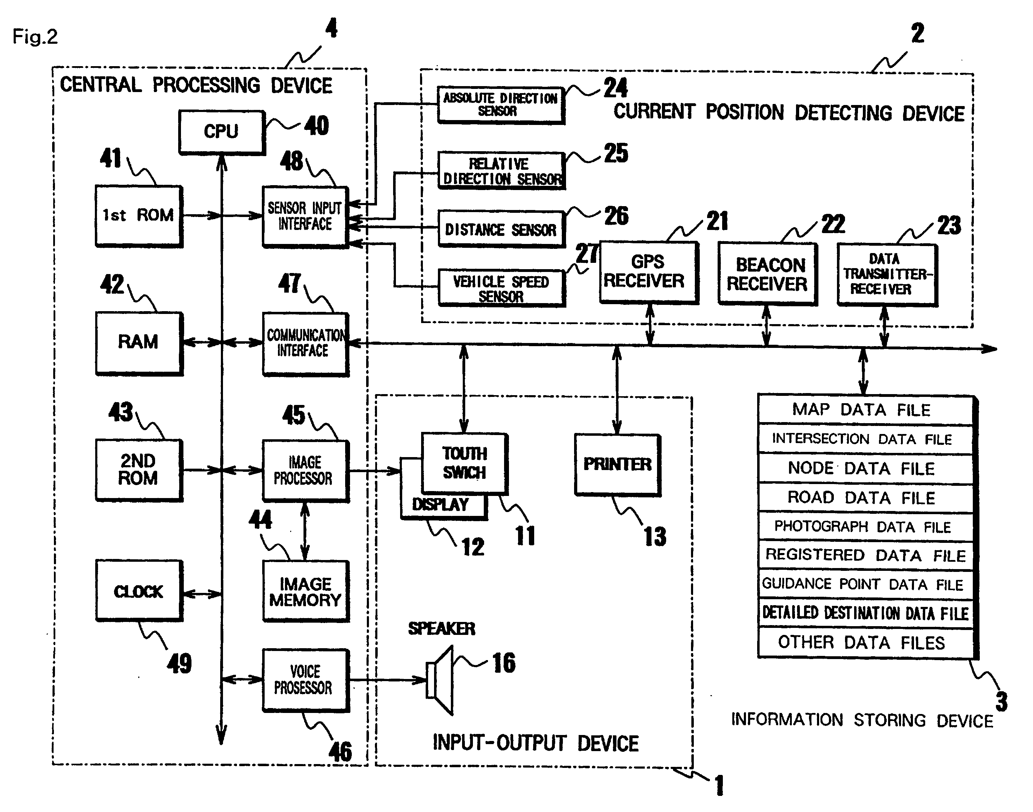

Referring to Figs. 1, 2, a vehicular navigation apparatus according to the invention comprises: an input-output device 1 for inputting and outputting information regarding route guidance, a current position detecting device 2 for detecting information regarding current position of a vehicle in which the apparatus is installed, an information storing device 3 storing navigation data needed for computation to find a route, display guidance data needed for route guidance, etc., a central processing device 4 for executing route search operation and display guidance operation needed for route guidance, and controlling the entire system. The constructions of these devices will first be described.

The input-output device 1 has functions for inputting a destination, and for instructing the central processing device 4, by a driver's intention, to execute navigation operation so as to output guidance information by voice and/or on a screen, and for outputting to a printer data obtained as a result of processing. To realize these functions, the device 1 has in its input section touch switches 11 and other operating switches for inputting a destination by using a telephone number or coordinates on a map, and for requesting route guidance. The input section may be of remote control type and the like. The output section has a display 12 for displaying inputted data and displaying a route guidance automatically in response to a driver's request, a printer 13 for printing data processed by the central processing device 4 or data stored in the information storing device 3, and a loud speaker 16 for vocally outputting route guidances.

The display 12 is constituted by a color CRT or a color liquid crystal display. The display 12 displays all the color screens necessary for navigation, such as intersection picture screens, segment picture screens or route setting screens based on guidance data and map data processed by the central processing device 4, and also displays in a main screen buttons for setting route guidance and switching guidances or screens during route guidance. Information regarding an intersection that is being traveled through, such as the name of the intersection, is displayed in color in a segment picture screen in real time in a pop-up fashion.

The display 12 is disposed in an instrument panel near the driver's seat, so that a driver can check the current position of the vehicle and obtain information on the route ahead by looking at a segment picture displayed. The display 12 has a touch switch panel 11 corresponding to the display of the functional buttons, so that a signal is inputted by touching a button to execute the corresponding operation mentioned above. The input signal generating means including the buttons and the touch switch panel constitutes the input section, and will not be described further in detail.

The current position detecting device 2 comprises a GPS receiver 21 that uses a satellite navigation system (or GPS), a beacon receiver 22, a data transmitter-receiver 23 for receiving GPS correction signals using, for example, cellular phone or FM multiple signals, an absolute direction sensor 24 formed of a geomagnetic sensor or the like, a relative direction sensor 25 formed of a wheel sensor, a steering sensor, a gyroscope and the like, a distance sensor 26 for detecting travel distance on the basis of the number of rotations of a wheel, and a vehicle speed sensor 27 for detecting travel speed of the vehicle.

The information storing device 3 stores files of various data for route guidance including map data, intersection data, node data, road data, photograph data, registered point data, destination point data, guidance point data, detailed destination data, destination name pronunciation data, phone number data, etc. In other words, the information storing device 3 is a database storing all the data necessary for the navigation apparatus.

The central processing device 4 comprises: a CPU 40 for executing various computations; a first ROM 41 storing programs for route search operations and the like, and programs and data for the display output control needed for route guidance and the voice output control needed for vocal guidance; a RAM 42 for temporarily storing coordinates of point of a set destination, guidance information for a found route including road surface code Nos., and the like, and data under computing process; a second ROM 43 storing display information data needed for map display and route guidance; an image memory 44 storing image data to be used for displaying screens on the display; an image processor 45 for retrieving image data from the image memory 44 and performing the image processing of the image data and outputting the processed data to the display on the basis of a display output control signal from the CPU 40; a voice processor 46 for synthesizing sounds, voices, phrases, sentences or the like retrieved from the information storing device 3, and converting the synthesized products into analog signals, and outputting the signals to the speaker 16, on the basis of a voice output control signal from the CPU 40; a communication interface 47 for inputting and outputting data through communications; a sensor input interface 48 for receiving sensor signals from the current position detecting device 2; and a clock 49 for recording date or hours into internal diagnostic information. Route guidances can be displayed or vocally outputted according to the driver's selection.

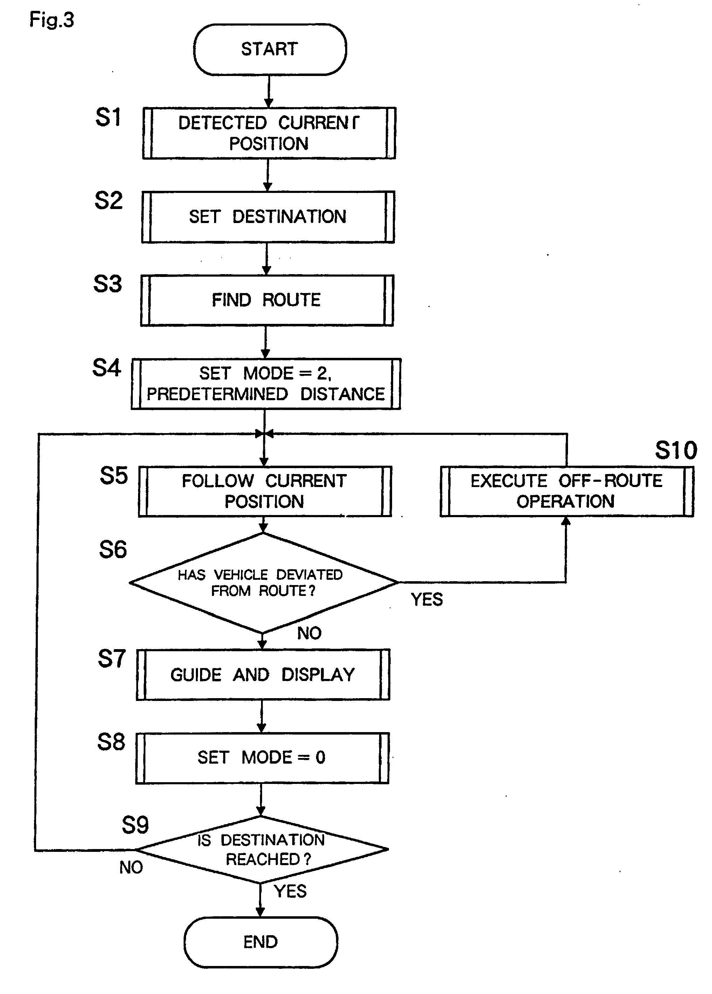

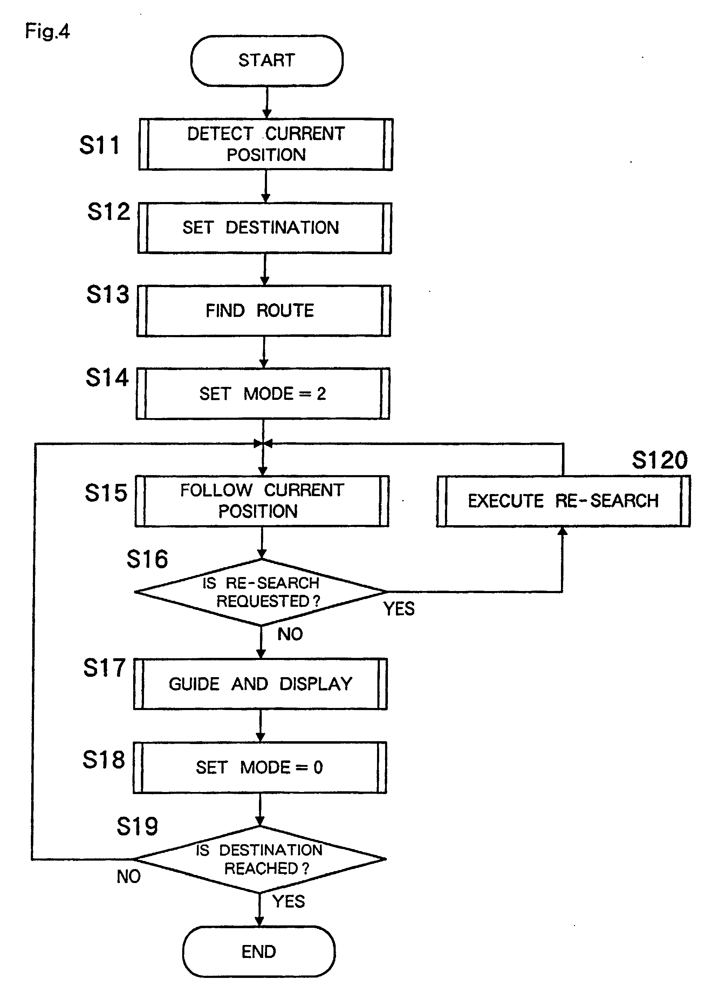

Fig. 3 and Fig. 4 illustrate the flow of the operation of the entire system. The apparatus first determines a current position (departure point), which is needed for route search, by using the current position detecting device 2 (step S1). Then, a destination is set by inputting setting conditions of the destination on a destination setting screen through the input device (step S2), and the route searching means searches for a route (step S3). A predetermined distance is set after mode information MODE is set to "2" (step S4). The mode information MODE is set to "0" when the vehicle is on a guiding route, "1" when the vehicle is traveling in a place other than guidance possible roads (re-search will be started on a guidance possible road), "2" when a search is successfully completed, and "3" when a search has failed. The "guidance possible road" data is road data included in the map information stored in the information storing device 3 and, more specifically, road data available for route search and route guidance. According to this embodiment, roads having a predetermined width or greater are determined as guidance possible roads, and roads having less widths are classified as narrow roads the data about which are not used for route search or route guidance but used only for display. Roads may be classified by road type instead of width. Further, road classification may be omitted and all the road data stored in the information storing device 3 may be set as guidance possible road data. In practice, the vehicular navigation apparatus does not necessarily store in the information storing device 3 data about all the roads covering back streets and private roads. Therefore, if a driver leaves a guiding road and enters a road that is not registered in the information storing device 3, the apparatus cannot recognize the road corresponding to the current position and, thus, cannot perform route guidance or route search. The above-mentioned "when the vehicle is traveling in a place other than guidance possible roads" means "when the vehicle is traveling on such a road". The above-mentioned predetermined distance is set for determination of deviation from route. That is, if the vehicle has traveled through the predetermined distance after going off a guiding route, the apparatus determines that the vehicle has deviated from the route, and automatically starts the re-search of a route.

When the route guidance along a found route is started by touching the guidance starting key of the input device, the current position detecting means determines the position of the vehicle and continues detecting the current position (step S5). Subsequently, the distance between the current position and the route is determined and compared with the predetermined distance to determine whether the vehicle has deviated from the route (step S6). If the vehicle has deviated from the route, the re-search means included in the route searching means executes a re-search of a route (step S10). If the vehicle has not deviated from the route, the output means displays and/or vocally outputs a navigation guidance in accordance with a signal outputted from the route guidance control means on the basis of the same route (step S7), and MODE = 0 is set (step S8). Then, the distance from the current position to the destination is calculated, and the arrival at the destination is determined depending on whether the calculated distance has becomes a predetermined value (step S9) or less. If the calculated distance is the predetermined value or less, it is determined that the vehicle has arrived at the destination, and the route guidance ends. Conversely, if the distance from the current position to the destination is more than the predetermined value, the operation returns to step S5 to continue detecting the current position of the vehicle.

Although the above-described operation automatically detects deviation from route and re-searches for a route, the system may be designed to display, for example, "RE-SEARCH" key, when detecting deviation from route, so as to allow a driver to instruct to start the re-search. The thus-designed system operates as illustrated in Fig. 4. In the operation, the setting of a predetermined distance is omitted from step 514, and it is determined in step S16 whether a re-search request is inputted through the input device. If a re-search request is inputted, step S20 executes re-search operation. Further, the system may be designed to enable the search of a route that is as much different from the previously set route as possible by a driver's instruction made during travel along the previously set guiding route. For example, the data regarding roads, branch or turning points, etc. may be accompanied with cost data based on various types of information that includes road widths, types of road such as superhighways, national roads, state or municipal roads, etc., intersection traffic light waiting time, road restrictions such as one-way street or no-entry, or degrees of traffic crowdedness converted into data, and so on. If such cost data is adjusted so that the cost of the previously set guiding route becomes high, the lowest cost guiding route to be found by re-search will become different from the previously set guiding route.

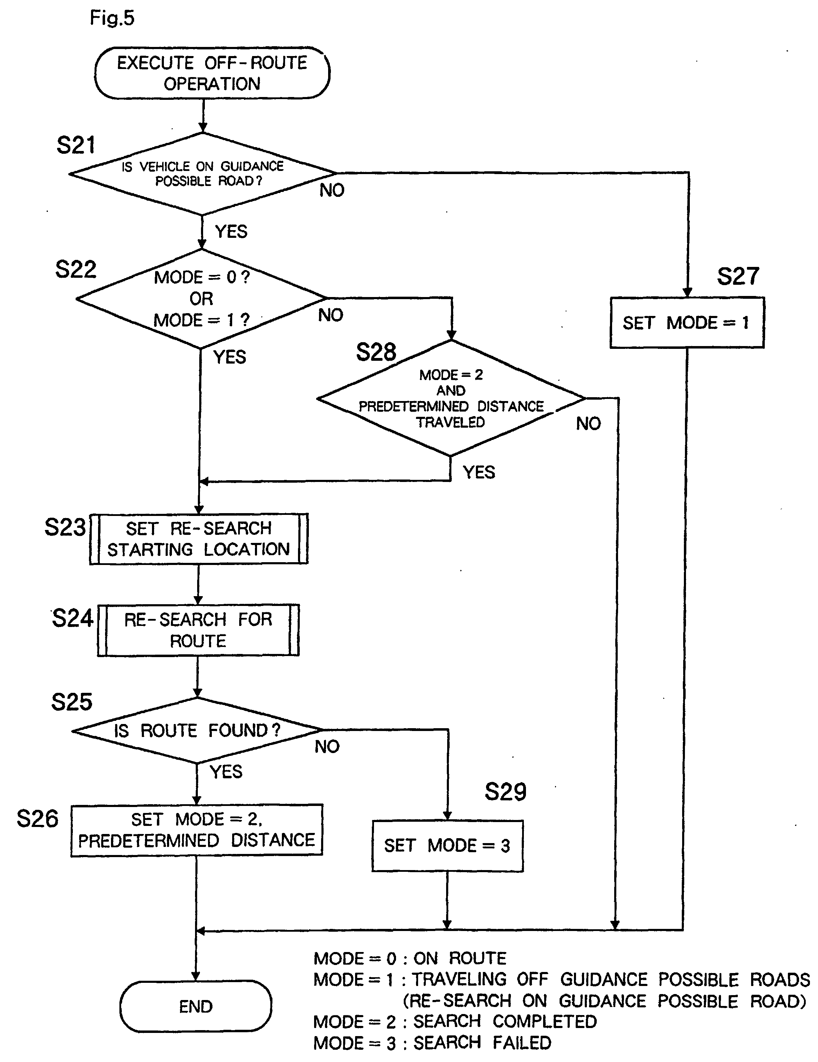

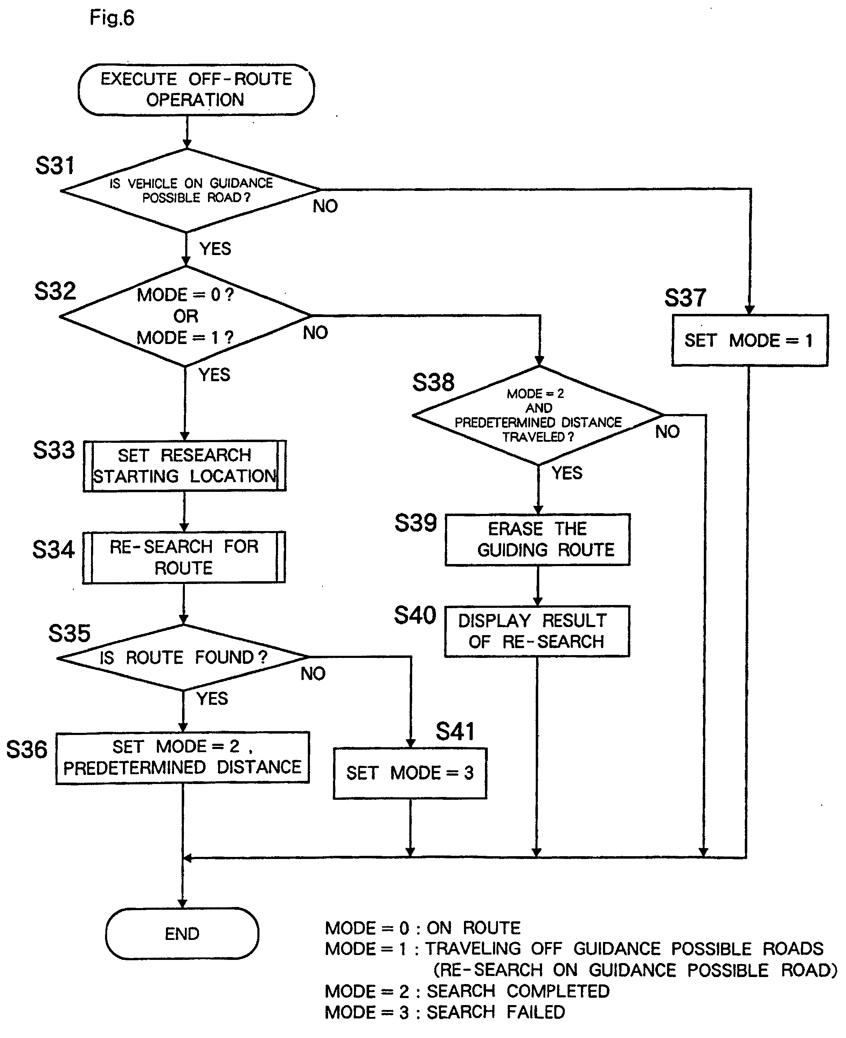

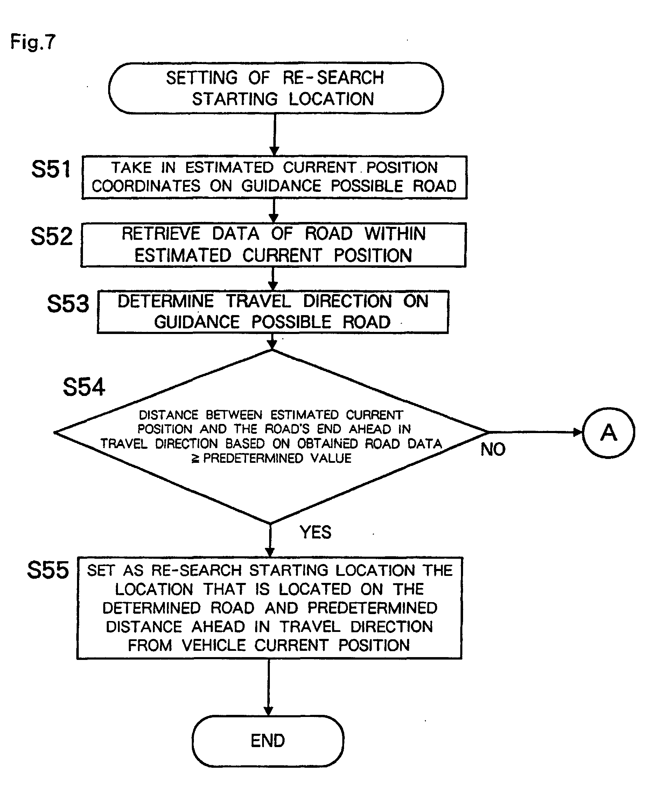

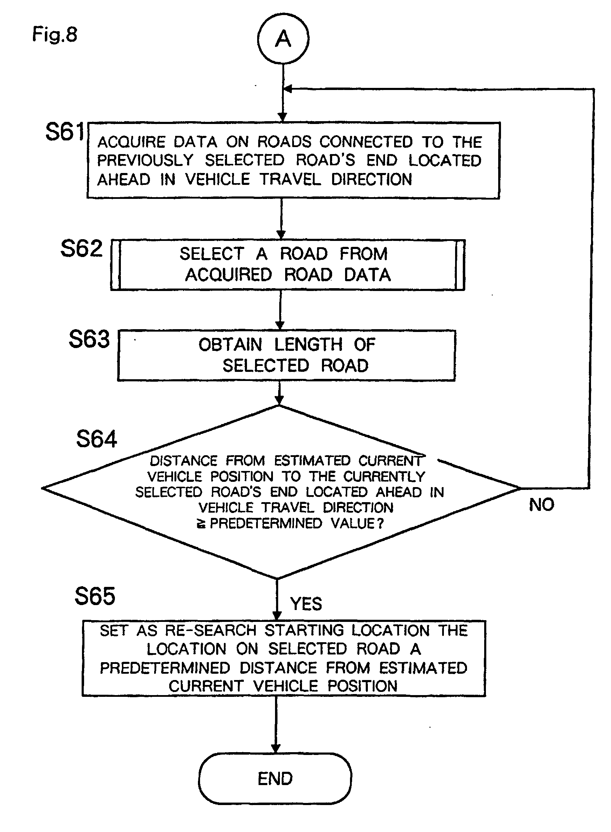

The off-route operation of step S10 shown in Fig. 3 will be described in detail. Figs. 5, 6 illustrate examples of the off-route operation. Figs. 7, 8 illustrate examples of the operation of setting a re-search starting location. This embodiment of the invention uses for the route search the stored information including data on intersections and roads arranged in the form of road segments including segments between intersections and, if necessary, other characteristic objects such as rail road crossings, and connection information on roads connected to such roads or intersections. The search can be started at a given location on the roads.

The off-route operation first determines whether the current vehicle position continually detected is on a guidance possible road (step S21). If the current position is not on a guidance possible road, MODE=1 is set (step S27) and the operation ends. If the current position is on a guidance possible road, it is checked whether MODE is one of 0 and 1 (step S22). If MODE is nether 0 nor 1, which means that the vehicle is traveling on a guidance possible road that is not along the guiding route, it is then determined whether MODE=2 has been set and the predetermined distance has been traveled (step S28). If step S22 makes negative determination but step S28 makes affirmative determination, which means that following the completion of the search, the vehicle has traveled through the predetermined distance on a guidance possible road that is off the guiding route, or if step 22 makes affirmative determination, which means an event where the vehicle is off the route but on a guidance possible road or an event where the vehicle deviated from the route and got into a place other than the guidance possible roads and then comes onto a guidance possible road, a re-search starting location is set (step S23). After re-search is executed (step S24), the setting of MODE=2 and a predetermined distance (step S26) or the setting of MODE=3 (step S29) is performed in accordance with the determination on whether a guiding route has been found (step S25).

Alternatively, if following the completion of a search the vehicle has traveled at least the predetermined distance on a guidance possible road but off the route so that step S28 makes affirmative determination, the processing as illustrated in Fig. 6 may be performed instead of that shown in Fig. 5. That is, the previously set guiding route is erased (step S39) and the result of re-search is displayed (step S40).

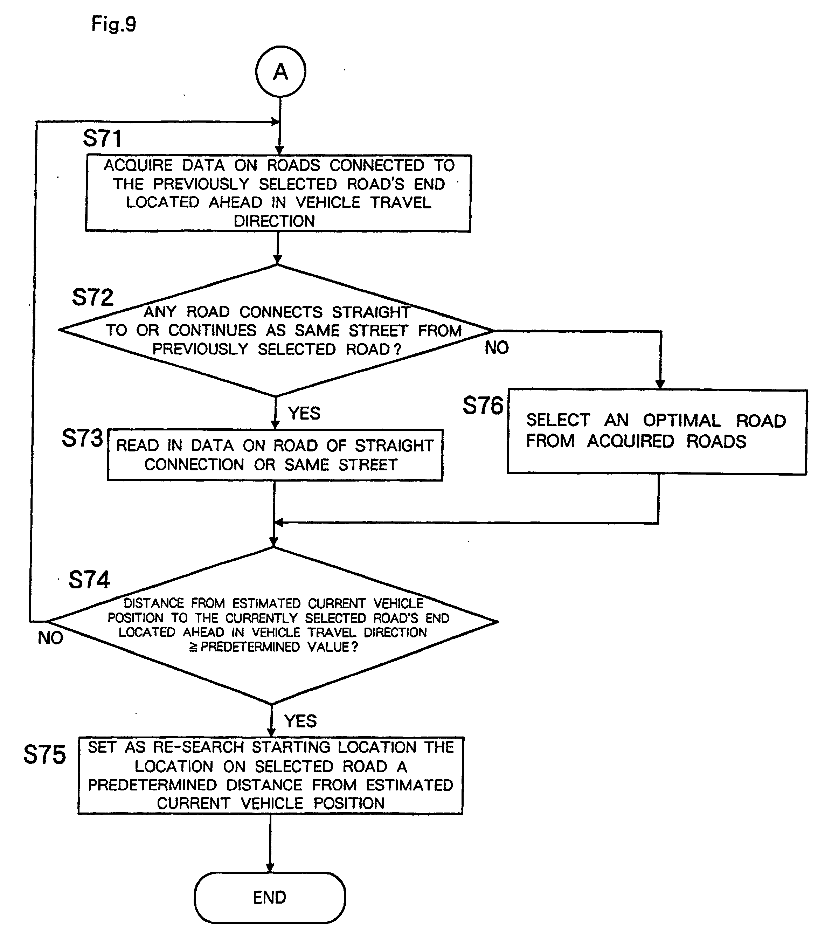

The setting of a re-search starting location in step S23 in Fig. 5 and step S33 in Fig. 6 sets as a re-search starting location a location that is located on the road a predetermined distance ahead of the current position, in response to a request to start re-search. If the point located on the road a predetermined distance ahead of the current position does not exist on the currently traveling road, a road connecting to the current road is searched for. More specifically, as illustrated in Fig. 7, after estimated current position coordinates on the guidance possible road are obtained (step S51), the data of a road included within the estimated current position is retrieved (step S52). Then, a current position of the vehicle and its travel direction are determined to compute the travel direction through the guidance possible road (step S53). After that, it is determined whether the distance between the estimated current position and the end point of the road located ahead in the travel direction based on the obtained road data is at least a predetermined value (step S54). If the distance equals or exceeds the predetermined value, the location that is located on the determined road and located a predetermined distance ahead in the travel direction from the current vehicle position is set as a re-search starting location (step S55). Conversely, if step S54 determines that the distance is less than the predetermined value, data on a plurality of roads connecting to the current road are retrieved and an appropriate road is selected therefrom. The flow of this processing is illustrated in Figs. 8 and 9, and will be described below.

In an example illustrated in Fig. 8, data on roads connecting to the end of the previously selected road, the end being ahead in the travel direction from the current vehicle position, are acquired (step S61). The data on a single road is selected from the acquired road data (step S62). Then, the length of the selected road is read in (step S63). It is then determined whether the distance between the estimated current vehicle position and the currently selected road's end located ahead in the vehicle travel direction equals or exceeds a predetermined value (step S64). The processing up to step S61 is repeated until the distance is found to be the predetermined value or greater. When the distance is the predetermined value or greater, the location on the selected road located a predetermined distance from the estimated current vehicle position is set as a re-search starting location (step S65). Thus, the cost data included within the retrieved road data are used to select a road. That is, the road having the least cost is selected. The "cost" herein is determined based on the independent road data, such as road lengths, road types or road widths, and the relative road data, such as connections of roads (turning right or left is a high cost). This embodiment thus selects an optimal route segment to provide an easy-to-drive road that connects to the re-search starting location, thus producing a suitable re-search result.

In an example shown in Fig. 9, the data on roads connected to the previously selected road's end located ahead in the vehicle travel direction is acquired (step S71), and it is checked whether the acquired road data includes a road connected straight to the previously selected road or continuing as the same street from the road (step S72). The straight connection or the same street continuation is determined on the basis of the angle between the entry and exit roads connected at an intersection computed from the road data. If any of the retrieved roads is of the straight connection or the same street continuation, the data of that road is retained (step S73). If there is no such road, an optimal road is selected from the retrieved roads (step S76). Then, it is determined whether the distance between the estimated current vehicle position and the currently obtained road's end located ahead in the vehicle travel direction is at least a predetermined value (step S74). If it is less than the predetermined value, the operation returns to step S71 to repeat the same processing. If the distance is the predetermined value or greater, the location on the obtained road located a predetermined distance from the estimated vehicle current position is set as a re-search starting location (step S75). Thus, a road having a least connecting angle is selected after computation of the angle between the connecting road and the current road. More specifically, this operation sets a re-search starting location with the priority given to the driving straight condition so as to avoid the turning right or left as much as possible until arrival at the re-search starting location, since the driver tends to drive straight through intersections until the result of a search is displayed and guidance along the found route starts, in other words, while no guiding route is set.

The above-described operation is substantially equivalent to performance of a search of a partial route to a search starting location point, that is, determines a route to the search starting location although the route is not displayed. Therefore, the apparatus may provide simple guidances on a display or by voice, for example, "Follow the street.", "Go straight on.", or "Ahead, turn right." if there is a place to turn right (or left). Furthermore, while the above operation selects a single road connected to the current road, it is also permissible to set points on all the roads connected to the current road, each point located a predetermined distance from the current position, and compare the costs from the current position to the set points in order to select the road having the least cost.

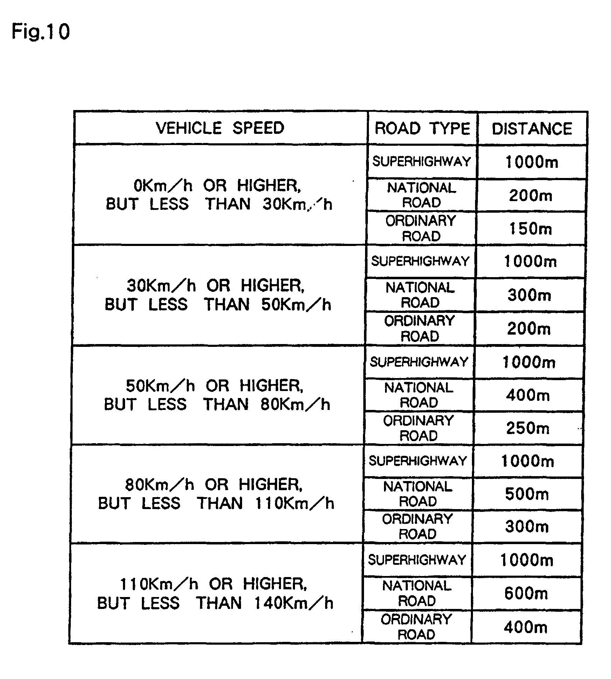

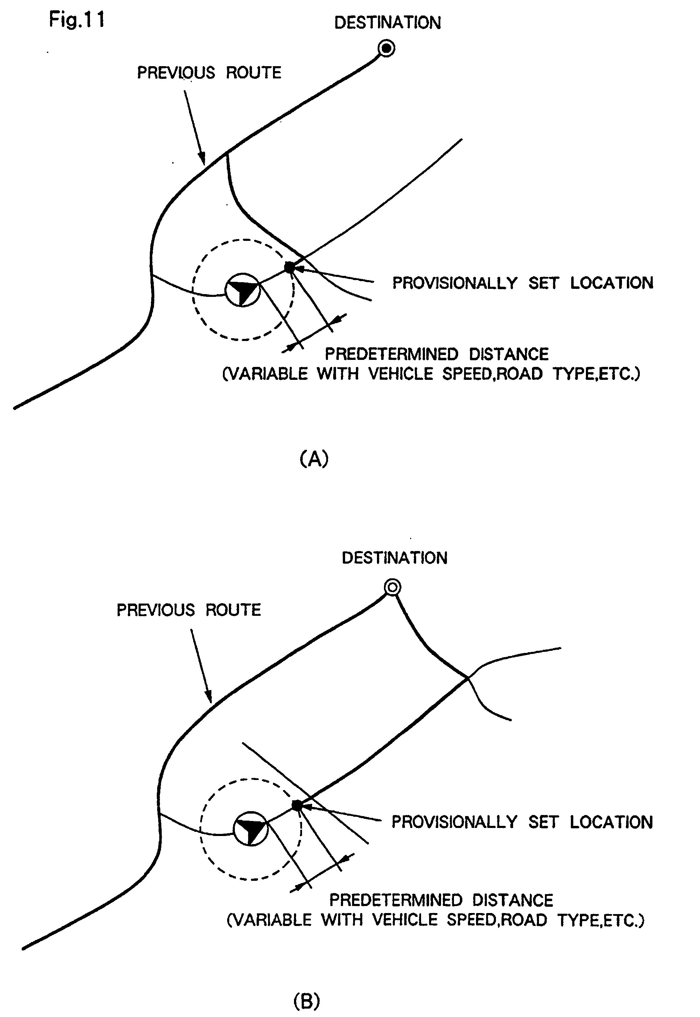

Fig. 10 shows an example of the table showing the correspondence among the vehicle speed, the road type and the distance. Figs. 11A, 11B illustrate examples of the guiding route found by a re-search executed by the off-route operation. The above-mentioned predetermined distance may be fixed or variable. If it is variable, a step of setting a predetermined distance is inserted into the procedure of setting a re-search starting location, for example, immediately before step S51 of the operation illustrated in Fig. 7. In the inserted step, the current vehicle speed is detected by the vehicle speed sensor 27, and a predetermined distance is set corresponding to the detected vehicle speed with reference to the table as shown in Fig. 10. Since a greater vehicle speed results in sooner arrival at a re-search starting location if the predetermined distance is fixed, the predetermined distance is variably set to increase the time required to get to the re-search starting location. Similarly, the predetermined distance may be set in accordance with the detected type of a currently traveling road, with reference to the table shown in Fig. 10. Furthermore, the predetermined distance may be variably set depending on the search methods, that is, a surrounding search as illustrated in Fig. 11A (wherein re-search is performed with the priority given to the returning to the previous guiding route) or an entire route search as illustrated in Fig. 11B (where an initial search is performed again to find a route from the re-search starting position to the destination). The surrounding search requires a less search time than the entire route search and, therefore, permits the setting of a closer re-search starting location.

Although the above-described embodiment sets a starting point of a re-search of a route and determines a route starting at that point, the display and guidance may be performed in such a manner that the route from the starting point to the destination is displayed and the guidance is started at the starting point or in such a manner that the route from the current position assumed at the time of the completion of extraction of a route in the re-search operation to the starting point of the route is connected to the route from the starting point to the destination on the display and guidance is performed based on the combined route. In addition, although the embodiment determines the starting point with reference to a point at which the re-search request is inputted, such a reference point may instead be a current position taken at the time of setting a route after the data regarding the re-search has been read in. Further, such a reference point may also be a point at which the display control is started after the route has been set.

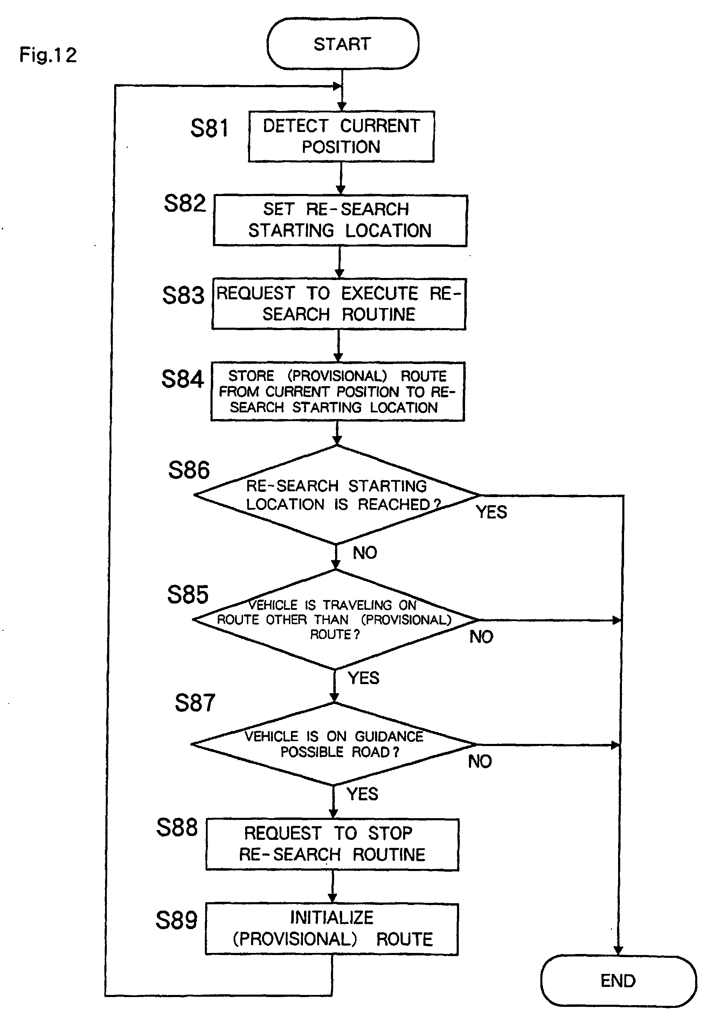

Fig. 12 illustrates an example of the operation performed if the turning right or left or the like is made before the starting point is reached.

Referring to Fig. 12, the current position, which is needed for a re-search, is determined by the current position detecting means (step S81). After the re-search starting location is set (step S82), a request to execute the re-search routine is issued (step S83). Then, a provisional route from the current position to the re-search starting location is stored (step S84), and it is then determined whether the re-search starting location has been reached (step S85). If the re-search starting location has not been reached, it is then determined whether the vehicle is traveling on a route other than the provisional route (step S86). If the vehicle is traveling on a route other than the provisional route, it is then determined whether the vehicle is on a guidance possible road (step S87). If it is on a guidance possible road, a request to stop the re-search routine is issued (step S88), and the provisional route is initialized or cleared (step S89), and then the operation returns to step S81 to repeat substantially the same processing. On the other hand, if step S85 determines that the re-search starting point has been reached, or if step S86 determines that the vehicle is not traveling on a route other than the provisional route after determination that the re-search starting point has not been reached, or if it is determined that the vehicle is not on a guidance possible road while the vehicle is on an other route, the operation ends.

With the operation described above, the embodiment sets a predetermined distance ahead in the vehicle travel direction from a current position, in accordance with the vehicle speed and the road type, and the location predetermined distance ahead is determined as a provisionally set location for performing a re-search. Thus, the embodiment prevents an incident where the vehicle passes by the route found by the re-search and is thereby able to perform guidance along the found route that starts ahead.

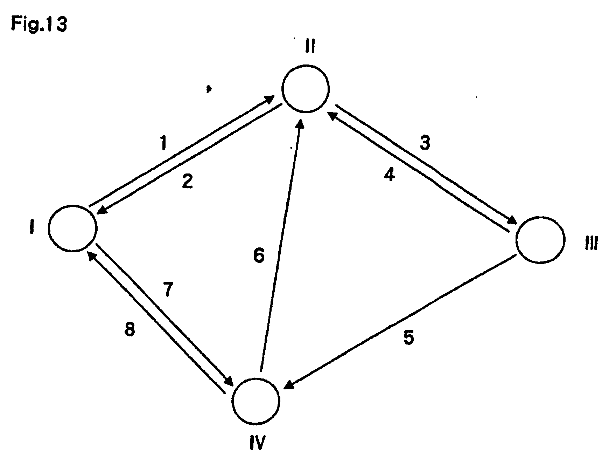

The setting of a search starting location will be described. Fig. 13 illustrates an example of the arrangement of data on road networks and roads. When detecting a current vehicle traveling direction and setting as a search starting location the location on a road located a predetermined distance ahead of a current position on the currently traveling road, the currently traveling road and the traveling direction through the road are determined on the basis of the current vehicle traveling direction detected by the current position detecting device and the road data stored in the information storing device. It is assumed herein that the road data stored in the information storing device are stored separately for permitted traffic directions through each road connecting two intersections, as indicated in Fig. 13. For example, since the road connecting between the intersections I and II is a two-way street, data 1 and data 2 for the opposite directions through the road are separately stored. Since the road between the intersections III and IV is a one-way street allowing traffic only from the intersection III to the intersection IV, only data 5 is stored for that road. Each data group of the road data stored separately for the traffic directions includes various data for the route search, such as information about roads connected to that road (permission or prohibition of entry thereinto), the road width, the number of lanes, the road length, or the costs of the connecting roads.

The data about the road (separate for traffic direction) on which the vehicle is traveling is selected in accordance with the road data and the current vehicle travel direction detected by the current position detecting device. More specifically, a road (for example, road data 1 and 2 in Fig. 13) is first specified as a traveling road with reference to the current vehicle position, and then the current traveling road and the travel direction through the *road* is determined on the basis of an angular difference between the direction of the specified road and the vehicle travel direction. Alternatively, the traveling direction through a road may be determined by computing the direction of entry into the road that is assumed to be the traveling road with reference to the past travel track. In addition, it may also be determined only from the detected vehicle travel direction.

The present invention is not limited to the above-disclosed embodiment or examples, but may be modified in various manners. For example, although the above embodiment performs a re-search automatically of by a key input when deviation from route is detected, it should be apparent that this art is applicable to initial searches in substantially the same manner as to re-searches. It should also be understood that re-searches include various search methods proposed by the present applicant, such as the surrounding search that searches for a route to return to the previous guiding route and connects the found route to the previous guiding route, the entire route search that searches for a new route to the destination or a passing point, the second route search that searches for another guiding route on the predetermined guiding route, etc.

Furthermore, although the above embodiment comprises the information storing device and the central processing device that are installed in a vehicle, the apparatus of the invention may be constructed such that the information storing device storing data needed for route search and route guidance, for example, map data, and the central processing device for performing route search are installed in an information source center or the like facility outside vehicles, and a transmitter-receiver provided in a vehicle is used to access to the center. In an example construction, the destination or passing point inputted by a user, or other data, such as search conditions, are transmitted from the vehicle to the center, and the center performs route guidance based on the received data. Since the center can add various traffic information, such as street congestion or restrictions, to perform route search, the search of a route can be suitably performed by taking into account various traffic information and the like and, further, the information storing device and the central processing device on the vehicle end can be simplified.

## Claims

1. A vehicular navigation apparatus for guidance along a preset route, comprising:
a current position detecting device (2) for detecting a current position of a vehicle in which the device is installed;
an information storing device (3) for storing map information and other route information for route search and route guidance;
an input device (1) for inputting at least one of a destination and a passing point and for inputting an instruction to search for a route to said at least one of the destination and the passing point on the basis of the current position detected by the current position detecting device;
an output device (1) for outputting information for route guidance; and
a central processing device (4) having route searching means (4a) for searching for a route from the current position to said at least one of the destination and the passing point on the basis of the map information, route storing means (4b) for temporarily storing the route found by the route searching means (4a), and route guidance control means (4c) for outputting to the output device (1) a signal for executing route guidance based on the route,
the route searching means (4a) determining as a route search starting location a point on a road that is stored in the information storing device (3) and that is located a predetermined distance ahead in a travel direction from the current position, and searching for a route from said location wherein in case an intersection (S54, S61) is retrieved within a distance shorter than the predetermined distance the route searching means (4a) set the point at the predetermined distance ahead on a connecting road connected to a current road at the intersection, wherein the connecting road is the optimum road exiting the intersection, wherein the optimum road is the road having the least cost, which is determined based on the independent road data, such as the road lengths, road types, road widths, and relative road data, such as the angle to the current road direction.

2. A vehicle navigation apparatus according to claim 1, wherein the point is not set on the connecting road in case a further intersection (S64, S61) of the connecting road is retrieved within a distance shorter than the predetermined distance, in this case the operation of determining a connecting road is repeated until no further intersection (S64, S65) of the connecting road is retrieved within the predetermined distance

3. A vehicular navigation apparatus according to claim 1 or 2 wherein when performing route search again after a route has been stored in the route storing means (4b), the route searching means (4a) performs route search on the basis of an instruction from the input means (1).

4. A vehicular navigation apparatus according to anyone of claims 1, 2 or 3, wherein the central processing device further comprises off-route detecting means (4d) or determining whether a current position detected by the current position detecting device (2) has deviated from the route, and wherein the route searching means (4a) performs route search again if the off-route detecting means (4d) detects deviation from the route.

5. A vehicular navigation apparatus according to claim 3 or 4, wherein if the route searching means (4a) has performed route search again, the route guidance control means (4c) erases the previously found route from the route storing means and outputs a signal for executing route guidance based on a currently found route under a condition that the route search has been completed and the vehicle has traveled through a predetermined distance.

6. A vehicular navigation apparatus according to claim 3 or 4, wherein when the route searching means (4a) performs route search again, the route guidance control means (4c) provides a predetermined navigation guidance until the route search ends.

7. An apparatus according to any of claims 1 to 6,
wherein if the vehicle is not traveling on a guidance possible road, the route searching means (4a) waits until the vehicle comes to travel on a guidance possible road, and then searches for a route.

## Revendications

1. Appareil de navigation pour véhicule permettant d'assurer le guidage le long d'un itinéraire préétabli, comprenant :
un dispositif de détection (2) de la position actuelle pour détecter une position actuelle d'un véhicule dans lequel le dispositif est installé ;
un dispositif de stockage (3) d'informations pour stocker des informations de carte et d'autres informations d'itinéraire pour la recherche d'itinéraire et le guidage routier ;
un dispositif d'entrée (1) pour saisir au moins un élément parmi une destination et un point de passage et pour saisir une instruction de recherche d'un itinéraire menant audit au moins un élément parmi la destination et le point de passage en fonction de la position actuelle détectée par le dispositif de détection de la position actuelle ;
un dispositif de sortie (1) pour donnée des informations servant au guidage routier ; et
un dispositif de traitement central (4) comportant un moyen (4a) de recherche d'itinéraire pour rechercher un itinéraire allant de la position actuelle audit au moins un élément parmi la destination et le point de passage en fonction des informations de carte, un moyen de stockage (4b) d'itinéraire pour stocker temporairement l'itinéraire trouvé par le moyen (4a) de recherche d'itinéraire et un moyen de commande (4c) de guidage routier pour délivrer au dispositif de sortie (1) un signal servant à exécuter un guidage routier basé sur l' itinéraire,
le moyen (4a) de recherche d'itinéraire déterminant comme emplacement de départ de recherche d'itinéraire un point sur une route qui est stocké dans le dispositif de stockage (3) d'informations et qui est situé à une distance préalablement déterminée vers l' avant dans une direction de déplacement partant de la position actuelle, et cherchant un itinéraire à partir dudit emplacement, où dans le cas où une intersection (S54, S61) est extraite dans une distance inférieure à la distance préalablement déterminée, le moyen (4a) de recherche d'itinéraire établit le point à la distance préalablement déterminée en avant, sur une route d'embranchement reliée à une route actuelle au niveau de l'intersection, la route d'embranchement étant la route optimale sortant de l'intersection, la route optimale étant la route ayant le coût le plus faible, qui est déterminé en se basant sur les données de route indépendante, comme les longueurs de routes, les types de routes, les largeurs de routes, et des données de route relatives, telles que l'angle formé avec la direction de route actuelle.

2. Appareil de navigation pour véhicule selon la revendication 1, dans lequel le point n'est pas établi sur la route d'embranchement dans le cas où une section supplémentaire (S64, S61) de la route d' embranchement est extraite dans une distance plus courte que la distance préalablement déterminée, dans le cas où l'opération de détermination d'une route d'embranchement est répétée jusqu'à ce que plus aucune autre intersection (S64, S65) de la route d'embranchement ne soit extraite dans la distance préalablement déterminée.

3. Appareil de navigation pour véhicule selon la revendication 1 ou 2, dans lequel lors de l'exécution d'une nouvelle recherche d'itinéraire après qu'un itinéraire a été stocké dans le moyen de stockage (4b) d'itinéraire, le moyen (4a) de recherche d'itinéraire exécute une recherche d'itinéraire en fonction d'une instruction provenant du moyen d'entrée (1).

4. Appareil de navigation pour véhicule selon l'une quelconque des revendications 1, 2 ou 3, dans lequel le dispositif de traitement central comprend en outre un moyen de détection de sortie d'itinéraire (4d) pour déterminer si une position actuelle détectée par le dispositif de détection de position actuelle (2) a dévié de l'itinéraire, et dans lequel le moyen (4a) de recherche d'itinéraire exécute une nouvelle recherche d'itinéraire si le moyen de détection de sortie d'itinéraire (4d) détecte une déviation par rapport à l'itinéraire.

5. Appareil de navigation pour véhicule selon la revendication 3 ou 4, dans lequel si le moyen (4a) de recherche d'itinéraire a exécuté une nouvelle recherche d'itinéraire, le moyen de commande (4c) de guidage routier efface l'itinéraire précédemment trouvé du moyen de stockage d'itinéraire et délivre un signal en sortie pour exécuter un guidage routier basé sur un itinéraire actuellement trouvé sous condition que la recherche d'itinéraire est terminée et que le véhicule s'est déplacé sur une distance préalablement déterminée.

6. Appareil de navigation pour véhicule selon la revendication 3 ou 4, dans lequel quand le moyen (4a) de recherche d'itinéraire exécute une nouvelle recherche d'itinéraire, le moyen de commande (4c) de guidage routier assure un guidage de navigation préalablement déterminé jusqu'à ce que la recherche d'itinéraire finisse.

7. Appareil de navigation pour véhicule selon l'une quelconque des revendications 1 à 6, dans lequel si le véhicule n'est pas en train de se déplacer sur une route de guidage possible, le moyen (4a) de recherche d'itinéraire attend que le véhicule se déplace sur une route de guidage possible, puis recherche un itinéraire.

## Patentansprüche

1. Fahrzeugnavigationsvorrichtung zum Bereitstellen einer Führung entlang einer vorgegebenen Route, mit:
einer Ist-Positionserfassungseinrichtung (2) zum Erfassen der Ist-Position eines Fahrzeugs, in dem die Positionserfassungseinrichtung angeordnet ist;
einer Informationsspeichereinrichtung (3) zum Speichern von Karteninformationen und anderen Routeninformationen für eine Routensuche und Routenführung;
einer Eingabeeinrichtung (1) zum Eingeben eines Ziels und/oder eines Durchgangspunkts und zum Eingeben eines Befehls zum Suchen einer Route zum Ziel und/oder zum Durchgangspunkt auf der Basis der durch die Ist-Positionserfassungseinrichtung erfaßten Ist-Position;
einer Ausgabeeinrichtung (1) zum Ausgeben von Informationen für eine Routenführung; und
einer Zentraleinheit (4) mit einer Routensucheinrichtung (4a) zum Suchen einer Route von der Ist-Position zum Ziel und/oder Durchgangspunkt auf der Basis der Karteninformationen, einer Routenspeichereinrichtung (4b) zum Zwischenspeichern der durch die Routensucheinrichtung (4a) gefundenen Route und einer Routenführungssteuerungseinrichtung (4c) zum Ausgeben eines Signals zum Ausführen einer Routenführung basierend auf der Route an die Ausgabeeinrichtung (1);
wobei die Routensucheinrichtung (4a) als Startposition für die Routensuche eine Position auf einer Straße bestimmt, die in der Informationsspeichereinrichtung (3) gespeichert und sich bezüglich der Ist-Position in einer vorgegebenen Entfernung in Fahrtrichtung voraus befindet, und eine Route von dieser Position ausgehend sucht, wobei, wenn eine Kreuzung (S54, S61) innerhalb einer Entfernung erfaßt wird, die kleiner ist als die vorgegebene Entfernung, die Routensucheinrichtung (4a) die Position in der vorgegebenen Entfernung voraus auf einer Verbindungsstraße setzt, die an der Kreuzung mit der aktuellen Straße verbunden ist, wobei die Verbindungsstraße die von der Kreuzung abgehende optimale Straße ist, wobei die optimale Straße, die die Straße mit der geringsten Nachteilbewertung ist, basierend auf unabhängigen Straßendaten, z.B. der Straßenlänge, dem Straßentyp, der Straßenbreite und auf relativen Straßendaten, z.B. dem Winkel zur aktuellen Straßenrichtung, bestimmt wird.

2. Fahrzeugnavigationsvorrichtung nach Anspruch 1, wobei die Position nicht auf der Verbindungsstraße gesetzt wird, wenn innerhalb einer Entfernung, die kürzer ist als die vorgegebene Entfernung (S64, S61), eine weitere Kreuzung der Verbindungsstraße erfaßt wird, wobei in diesem Fall die Verarbeitung zum Bestimmen einer Verbindungsstraße wiederholt wird, bis keine weitere Kreuzung (S64, S65) der Verbindungsstraße innerhalb der vorgegebenen Entfernung erfaßt wird.

3. Fahrzeugnavigationsvorrichtung nach Anspruch 1 oder 2, wobei die Routensucheinrichtung (4a), wenn sie erneut eine Routensuche ausführt, nachdem eine Route in der Routenspeichereinrichtung (4b) gespeichert worden ist, eine Routensuche auf der Basis eines Befehls von der Eingabeeinrichtung (1) ausführt.

4. Fahrzeugnavigationsvorrichtung nach einem der Ansprüche 1, 2 oder 3, wobei die Zentraleinheit ferner eine Off-Route-Erfassungseinrichtung (4d) aufweist, um zu bestimmen, ob eine durch die Ist-Positionserfassungseinrichtung (2) erfaßte Ist-Position von der Route abweicht, und wobei die Routensucheinrichtung (4a) erneut eine Routensuche ausführt, wenn die Off-Route-Erfassungseinrichtung (4d) eine Abweichung von der Route erfaßt.

5. Fahrzeugnavigationsvorrichtung nach Anspruch 3 oder 4, wobei die Routenführungssteuerungseinrichtung (4c), wenn die Routensucheinrichtung (4a) eine erneute Routensuche ausgeführt hat, die zuvor gefundene Route von der Routenspeichereinrichtung löscht und ein Signal zum Ausführen einer Routenführung basierend auf einer aktuell gefundenen Route unter einer Bedingung ausgibt, daß die Routensuche abgeschlossen worden ist und das Fahrzeug eine vorgegebene Entfernung zurückgelegt hat.

6. Fahrzeugnavigationsvorrichtung nach Anspruch 3 oder 4, wobei, wenn die Routensucheinrichtung (4a) eine erneute Routensuche ausführt, die Routenführungssteuerungseinrichtung (4c) eine vorgegebene Navigationsführung bereitstellt, bis die Routensuche beendet ist.

7. Fahrzeugnavigationsvorrichtung nach einem der Ansprüche 1 bis 6, wobei, wenn das Fahrzeug nicht auf einer Straße fährt, für die eine Führung möglich ist, die Routensucheinrichtung (4a) wartet, bis das Fahrzeug auf einer Straße fährt, für die eine Führung möglich ist, und dann eine Route sucht.
